(19) **Europäisches Patentamt**

**European Patent Office**

**Office européen des brevets**

(11) **EP 1 193 993 B1**

(12) **EUROPEAN PATENT SPECIFICATION**

(45) Date of publication and mention
of the grant of the patent:
**18.01.2006 Bulletin 2006/03**

(51) Int Cl.:
*H04Q 7/38* (2006.01)

(21) Application number: **01308372.0**

(22) Date of filing: **01.10.2001**

(54) **Method for allocating radio resource, radio communication apparatus and radio communication system**

Verfahren zum Zuteilen von Funkressourcen, Funkkommunikationsgerät und Funkkommunikationssystem

Procédé d'allocation de ressources radio, appareil de radiocommunication et système de radiocommunication

(84) Designated Contracting States:
**DE FR GB IT**

(30) Priority: **02.10.2000 JP 2000302637**

(43) Date of publication of application:
**03.04.2002 Bulletin 2002/14**

(73) Proprietor: **NTT DoCoMo, Inc.**
**Tokyo 100-6150 (JP)**

(72) Inventors:
• **Kitazawa, Daisuke**
**Yokohama-shi,**
**Kanagawa 236-0053 (JP)**

• **Sato, Hijin**
**Yokohama-shi,**
**Kanagawa 234-0054 (JP)**
• **Umeda, Narumi**
**Yokohama-shi,**
**Kanagawa 236-0052 (JP)**

(74) Representative: **Rees, Alexander Ellison et al**
**Urquhart-Dykes & Lord LLP**
**30 Welbeck Street**
**London W1G 8ER (GB)**

(56) References cited:
EP-A- 0 545 533          EP-A- 0 790 726
US-A- 5 729 542          US-A- 5 914 950

**Description**

BACKGROUND OF THE INVENTION

1. Field of the Invention

The present invention generally relates to methods for allocating radio resource, radio communication apparatuses and a radio communication system, and more particularly to a method for allocating radio resource, a radio communication apparatus and the radio communication system in which radio resource is allocated for a terminal or a communication connection.

2. Description of the Related Art

In a conventional radio communication system in which a conventional voice media was a core of communication connections, when control for improving in a use effectiveness of the radio resource was performed, the radio communication system controlled to maintain a fairness of a communication quality in all terminals. In the conventional radio communication system, it could be thought that the communication quality was equal to all terminals. However, recently, users demand to download various media such as not only voice media but also non-voice data communication, a dynamic image or static image, so called multimedia has been increasing. It is becoming essential for a future radio communications system to provide such various multimedia services.

In order to provide these multimedia services as users are sufficiently satisfied, it is thought that it is necessary to set communication quality as a different value for each terminal or each communication connection. For example, it is required for one communication connection conducting a voice communication to be as few transit-delay time as possible even if a tone quality is somewhat degraded. On the other hand, it is required for another communication connection conducting a data communication to have less data errors while a transit-delay time is allowed to be greater. Accordingly, when the radio communication system provides various multimedia services, as well as a system design conducting an effective transmission effectively using radio resource, a control is required to satisfy a communication quality needed by each of terminals or communication connection handling different media.

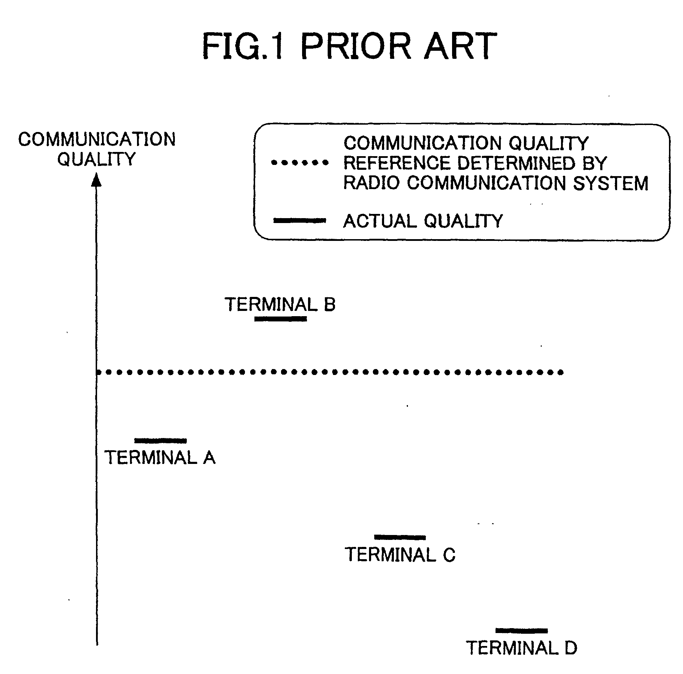

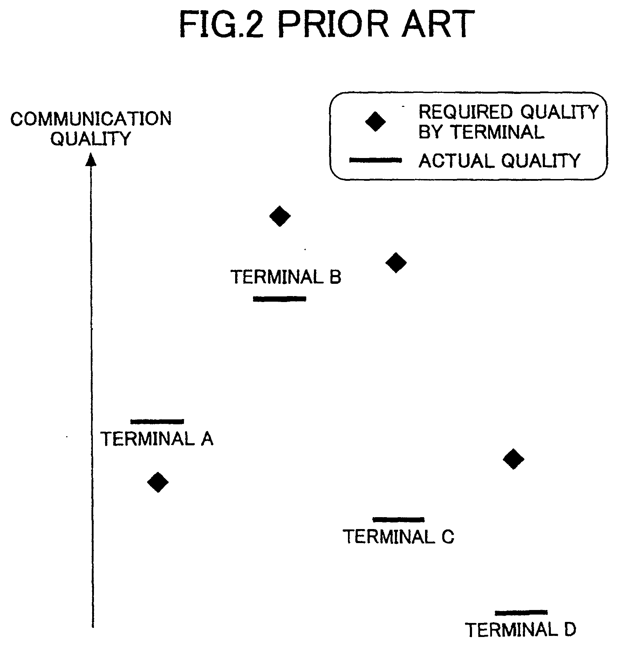

In a conventional technology, various designs have been made for the control in the radio communication system conducts such multimedia service. However, the communication quality is different for each terminal or each communication connection, a proper control cannot be conducted to satisfy the communication quality required by each terminal or each communication connection. Such problems in the conventional technologies will now be described with reference to FIG.1 and FIG.2.

FIG.1 is a diagram showing a relationship between a reference value and an actual value in a case in which the conventional radio communication system unitary determines the reference value of required communication quality for all terminals. In this case, it is assumed that one terminal establishes a communication connection for one medium.

In the conventional technology, when radio resource is allocated for each terminal, a terminal, which communication quality is degraded lower than required communication quality, is prioritized and then it is controlled so that the radio resource is allocated in a lower order of the communication quality. In FIG.1, reference values are unsatisfied for terminals A, C and D, respectively. For the terminals A, C and D, the radio resource is allocated in the low order of the communication quality, that is, in an order of the terminals A, C and D. Alternatively, instead of setting the reference value of the required communication quality, the radio resource is simply allocated in the low order of the communication quality. In this case, an allocation order of the radio resource becomes an order of the terminal D, C, A and B as the same as described above.

These radio resource allocating processes described above can be applied in a case in which each terminal requires the same communication quality, but cannot be applied in a case in which each terminal requires a different communication quality. For example, in these radio resource allocating processes, even if the terminal A severely requires the communication quality more than the terminal D, the radio resource is not allocated to the terminal A with a higher priority than the terminal D. Accordingly, when the communication quality required by each terminal is different, it is required that each terminal makes a request of the radio communication system and the radio communication system allocates the radio resource based on the communication quality required by each terminal (hereinafter called a required quality).

FIG.2 is a diagram showing a relationship between the required quality and actual communication quality in a case in which each terminal individually requires a necessary communication quality. In a multimedia communication system, it is thought that each terminal requires a different communication quality. In these conventional radio resource allocating process in this case, the radio resource is allocated in an order of the terminal D, C, A and B and the terminal A satisfying the required quality is prioritized higher than the terminal B that does not satisfy the required quality. In addition, when the terminal C is compared with the terminal D, the terminal C is much lower than the requested quality and then the terminal C should be prioritized higher than the terminal D. However, in the conventional radio resource allocating process, the terminal D is prioritized higher than the terminal C.

As described above, the conventional radio resource allocating process simply allocates the radio resource in the low order of the communication quality. Alternatively, the conventional radio resource allocation process prioritizes terminals which communication qualities are lower than a fixed or unitarily reference value of the radio communication system, and then allocates the radio resource to the terminals in the low order of the communication qualities. Either one of these conventional radio resource allocating processes is an effective allocating process only in a case in which all terminals or all communication connections require the same communication quality. However, in a radio communication system for multimedia, each terminal or each communication connection requires a different communication quality. Thus, when the radio resource is allocated in the order like the conventional radio resource allocating processes, the number of the terminals or the communication connections that do not satisfy the required quality is increased in a case there is no sufficient radio resource.

One know method of resource allocation in a radio communication system is disclosed in US-A-5729542. This discloses a method and apparatus in which terminals are assigned to a first group having a higher priority of access to services or to a second group having a lower priority of access to services. Radio resources are then assigned preferentially to terminals in the first group having a higher priority of access to services.

SUMMARY OF THE INVENTION

It is a general object of the present invention to provide a method for allocating radio resource, a radio communication apparatus and a radio communication system in which the above-mentioned problems are eliminated.

A more specific object of the present invention is to provide the method for allocating radio resource, the radio communication apparatus and the radio communication system which the number of terminals or communication connections satisfying respective required qualities can be increased.

The above objects of the present invention are achieved by a method for allocating radio resource to radio terminals or communication connections in a radio communication system in which each of the radio terminals or communication connections requires a different communication quality, the method including the steps of: (a) retrieving a first group including radio terminals or communication connections in which actual communication qualities are degraded more than required communication qualities, and a second group including radio terminals or communication connections in which actual communication qualities are favorable more than required communication qualities; and (b) allocating the radio resource to the radio terminals or communication connections in the first group with higher priority than the radio terminals or communication connections in the second group.

According to the present invention, instead of conventionally allocating the radio resource based on only the actual communication qualities without considering the required communication qualities by the radio terminals or communication connections, the radio resource is allocated to the radio terminals or communication connections in which the actual communication qualities are degraded more than the required qualities, with higher priority than the radio terminals or communication connections in which the actual communication qualities are favorable more than the required qualities. Therefore, it is possible to improve the actual communication qualities of the radio terminals or communication connections with higher priority. The radio resource can be the time slot in time-division multiple access method, the frequency band in frequency-division-multiplex access method, the diffusion code in code-division-multiple-access method, or transmitted electric power of the radio base station or the radio terminals.

The above objects of the present invention are achieved by a radio communication apparatus for allocating radio resource to radio terminals or communication connections in a radio communication system in which each of the radio terminals or communication connections requires a different communication quality, the radio communication apparatus including: a first retrieving part retrieving a first group including radio terminals or communication connections in which actual communication qualities are degraded more than required communication qualities, and a second group including radio terminals or communication connections in which actual communication qualities are favorable more than required communication qualities; and a first allocating part allocating the radio resource to the radio terminals or communication connections in the first group with higher priority than the radio terminals or communication connections in the second group.

According to the present invention, it is possible to provide the radio communication apparatus that is suitable for the above-described method for allocating radio resource to radio terminals or communication connections.

The above objects of the present invention are achieved by a radio communication system which allocates radio resource for a radio communication, the radio communication system including a radio communication apparatus and radio terminals, characterized in that each of the radio terminals includes a requiring part requiring a different communication quality to the radio communication system for each radio terminal or communication connection, and the radio communication apparatus including: a first retrieving part retrieving a first group including radio terminals or communication connections in which actual communication qualities are degraded more than required communication qualities, and a second group including radio terminals or communication connections in which actual communication qualities are favorable more than required communication qualities; and a first allocating part allocating the radio resource to the radio terminals or communication connections in the first group with higher priority than the radio terminals or communication connections in the second group.

According to the present invention, it is possible to provide the radio communication system that is suitable for the above-described method for allocating radio resource to radio terminals or communication connections.

BRIEF DESCRIPTION OF THE DRAWINGS

Other objects, features and advantages of the present invention will become more apparent from the following detailed description when read in conjunction with the accompanying drawings, in which:

FIG.1 is a diagram showing a relationship between a reference value and an actual value in a case in which a conventional radio communication system unitary determines a reference value of required communication quality for all terminals;

FIG.2 is a diagram showing a relationship between the required communication quality and actual communication quality in a case in which each terminal individually requires a necessary communication quality;

FIG.3 is a diagram showing basic configuration of a radio communication system applying radio resource allocating method and a radio communication apparatus according to the embodiment of the present invention;

FIG.4 is a block diagram showing a radio base station applying the radio communication apparatus according to the embodiment of the present invention;

FIG.5 is a flowchart for explaining the radio resource allocating process based on required quality of each of the radio terminals or communication connections;

FIG.6 is a flowchart for explaining a first radio resource allocating process in a low order of actual communication qualities;

FIG.7 is a flowchart for explaining a second radio resource allocating process for allocating the radio resource to unsatisfied radio terminals or communication connections in a descending order of differences between the required qualities and the actual communication qualities;

FIG.8 is a flowchart for explaining a third radio resource allocating process for allocating the radio resource to satisfied radio terminals or communication connections in an ascending order of a difference between the required quality and the actual communication quality;

FIG.9 is a flowchart for explaining a fourth radio resource allocating process for allocating the radio resource to the unsatisfied radio terminals or communication connections in an descending order of a degradation degree of the actual communication quality to the required quality;

FIG.10 is a flowchart for explaining a fifth radio resource allocating process for allocating the radio resource to the satisfied radio terminals or communication connections in an ascending order of a favorable degree of the actual communication quality to the required quality;

FIG.11 is a flowchart for explaining a sixth radio resource allocating process in a case in which quality-required radio terminals or communication connections and quality-not-required radio terminals or communication connections are managed by the same radio base station:

FIG.12 is a diagram showing an allowable delay time and an actual delay time for each radio terminal in a case in which the required quality is the allowable delay time.

FIG.13 is a diagram showing a state distinguishing radio terminals that satisfy the required qualities and that do not satisfy the required qualities in FIG.10;

FIG.14 is a diagram showing a required throughput and an actual throughput for each radio terminal in a case in which the required quality is a throughput; and

FIG.15 is a diagram showing a state distinguishing radio terminals that satisfy the required qualities and that do not satisfy the required qualities in FIG.12.

DESCRIPTION OF THE PREFERRED EMBODIMENTS

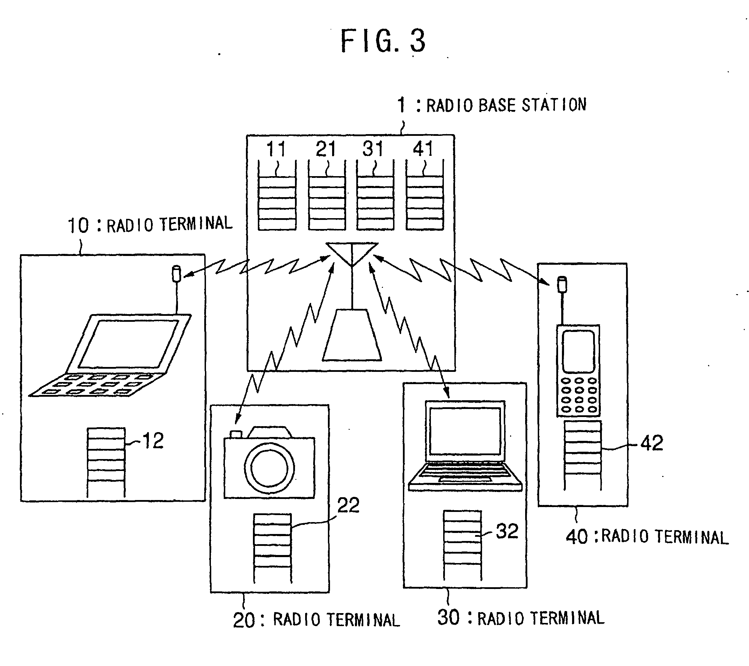

An embodiment according to the present invention will now be described with reference to figures. FIG.3 is a diagram showing basic configuration of the radio communication system applying the radio resource allocating method and a radio communication apparatus according to the embodiment of the present invention.

In FIG.3, one radio base station 1 manages a plurality of radio terminals 10, 20, 30 and 40. That is, all of the plurality of radio terminals 10, 20, 30 and 40 communicate the same radio base station 1 and the radio base station 1 allocates the radio resource such as a time slot in time-division multiple access method, a frequency band in frequency-division-multiplex access method, a diffusion code in code-division-multiple-access method, transmitted electric power of the radio base station 1 or the radio terminals 10 through 40, or a like, for each of the radio terminals 10 through 40 or each communication connection between the radio base station 1 and the radio terminals 10 through 40.

In FIG.3, for example, the radio terminal 10 receives image data from the radio base station 1 and the radio terminal 20 transmits picture data taken with a camera. Also, the terminal 30 transmits data by a personal computer and the terminal 40 conducts voice communications with another radio terminal located in a remote area. When the radio communication system is such a system for multimedia communications, each of the radio terminals 10 through 40 or each communication connection requires a different communication quality (required quality).

In addition, the radio base station 1 includes buffers 11, 21, 31 and 41 for the number of the radio terminals 10 through 40 that are to be connected to the radio base station 1. The buffer 11 stores packets to transmit to the radio terminal 10. Similarly, the buffers 21 through 41 store packets to transmit to the radio terminals 20 through 40, respectively. On the other hand, each of the radio terminals 10 through 40 are provided with buffers 12, 22, 32 and 42, respectively, to store packets to transmit to the radio base station 1.

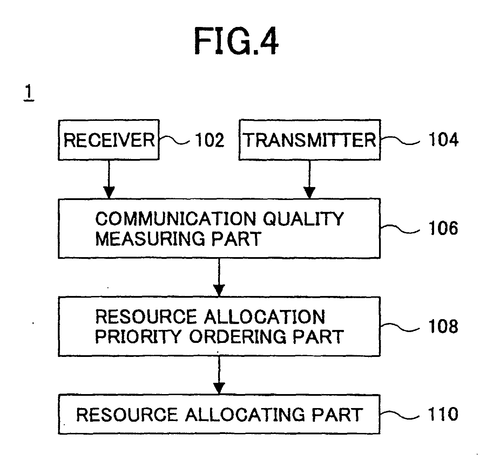

FIG.4 is a block diagram showing the radio base station applying the radio communication apparatus according to the embodiment of the present invention. In this case, the required quality for each of the radio terminals 10 through 40 or each communication connection is an allowable delay time, a transmission rate, a throughput or a like. In order to determine a priority order for radio resource allocation, the radio base station 1 executes a communication quality measuring part 106 and then the communication quality measuring part 106 measures the communication quality for each of the radio terminals 10 through 40 or each communication connection at that time based on information sent from a receiver 102 or a transmitter 104.

After the communication quality is measured, the radio base station 1 executes a resource allocation priority ordering part 108 and then the resource allocation priority ordering part 108 determines the priority order for the radio resource allocation by a method that will be described later, based on a measured communication quality and the required quality reported from each of the radio terminals 10 through 40 or each communication connection beforehand. Subsequently, a resource allocating part 110 allocates the radio resource for each of the radio terminals 10 through 40 or each communication connection based on the priority order determined by the resource allocation priority ordering part 108 and then data is received and transmitted.

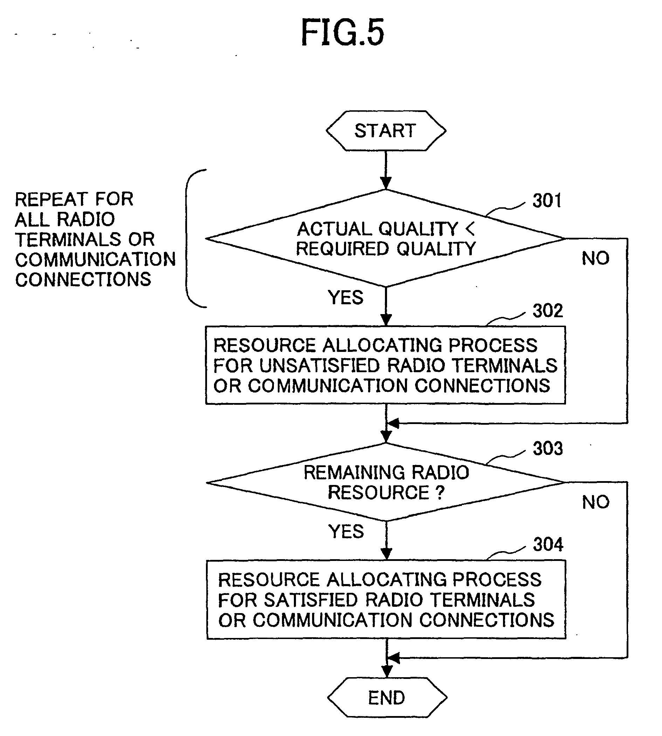

FIG.5 is a flowchart for explaining the radio resource allocating process based on the required quality of each of the radio terminals 10 through 40 or each communication connection. The resource allocation priority ordering part 108 determines for all radio terminals 10 through 40 or all communication connections whether or not an actual communication quality satisfies the required quality (step 301).

After this determination process, the resource allocation priority ordering part 108 determines the priority order so as to allocate the radio resource to unsatisfied radio terminals or communication connections, which do not satisfy respective required qualities, with higher priorities than satisfied radio terminals or satisfied communication connections, which satisfy respective required qualities. First, the radio resource allocating process with a higher priority is conducted for the unsatisfied radio terminals or communication connections (step 302). Next, it is determined whether or not the radio resource is remaining (step 303). When the radio resource is remaining, the radio resource allocating process is conducted for the satisfied radio terminals or communication connections (step 304).

As described above, since the radio resource allocating process considering the required quality is conducted, the radio resource is allocated to the unsatisfied radio terminals or communication connections with higher priority even if the actual communication qualities thereof are better then that of the satisfied radio terminals or the satisfied communication connections.

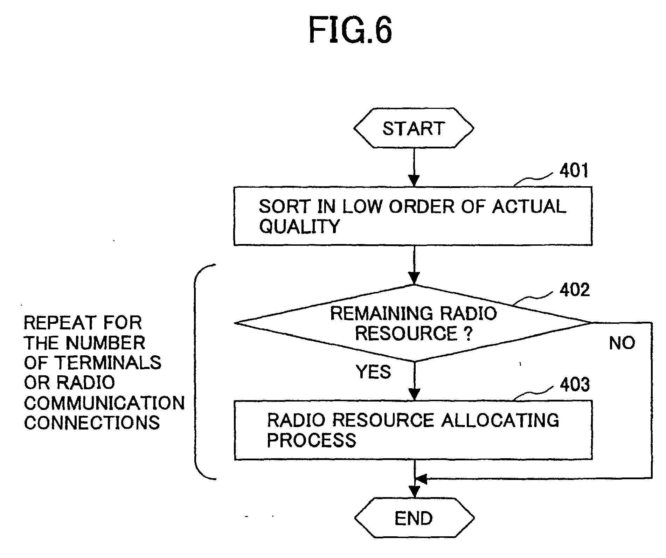

There are various methods for determining the priority order for the radio resource allocation in the radio resource allocating process for the unsatisfied radio terminals or communication connections (step 302) shown in FIG.5 and another radio resource allocating process for the satisfied radio terminals or the satisfied communication connections (step 304) shown in FIG.5. Details of the methods will now be described with reference to flowcharts shown in FIG.6 through FIG.10.

FIG.6 is a flowchart for explaining a first radio resource allocating process in the low order of actual communication qualities. First, the resource allocation priority ordering part 108 sorts all radio terminals or all communication connections that do not satisfy respective required qualities in the low order of the actual communication qualities (step 401). A sorted order becomes the priority order of the radio resource allocation.

When the priority order of the radio resource allocation is determined, the resource allocating part 110 determines whether or not the radio resource is remaining (step 402). When the radio resource is remaining, the remained radio resource is allocated to the unsatisfied radio terminals or communication connections (step 403). On the other hand, when the radio resource is not remained, the first radio resource allocating process is terminated

The determination process for determining whether or not the radio resource is remaining (step 402) and the radio resource allocating process (step 403) are repeated until the radio resource is allocated to all unsatisfied radio terminals or all unsatisfied communication connection that do not satisfy respective required quality, or until there is no radio resource available to allocate. Thus, by allocating radio resource in the low order of the actual communication quality, it is possible to improve greatly degraded communication qualities with higher priority.

In FIG.6, the case of allocating the radio resource to the unsatisfied radio terminals and the unsatisfied communication connections is described. Also, the radio resource can be allocated to the satisfied radio terminals or the satisfied communication connections.

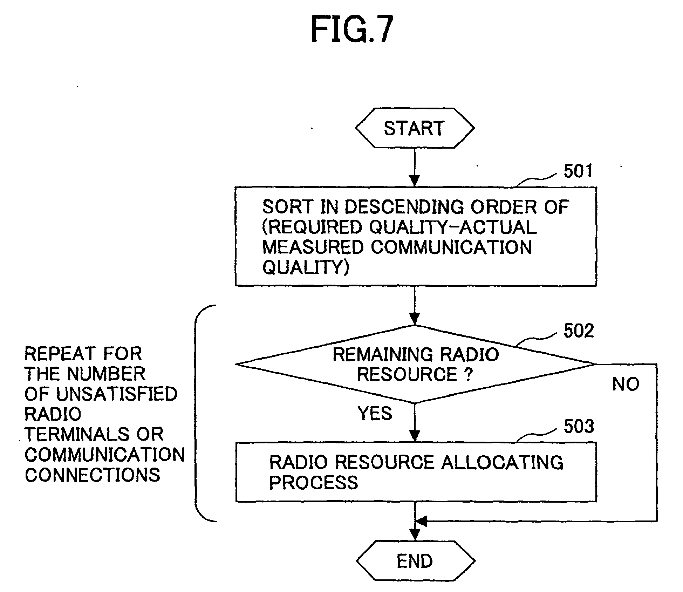

FIG.7 is a flowchart for explaining a second radio resource allocating process for allocating the radio resource to the unsatisfied radio terminals or communication connections in a descending order of differences between the required qualities and the actual communication qualities. First, the resource allocation priority ordering part 108 sorts all unsatisfied radio terminals or communication connections in the descending order (greater to smaller) of a value that deducted the actual communication quality from the required quality (step 501). The sorted order becomes the priority order of the radio resource allocation.

When the priority order of the radio resource allocation is determined, the resource allocating part 110 determines whether or not the radio resource is remaining (step 502). When the radio resource is remaining, the remained radio resource is allocated to the unsatisfied radio terminals or communication connections (step 503). On the other hand, when the radio resource is not remained, the second radio resource allocating process is terminated. Thus, by allocating the radio resource in the descending order of the value that deducted the actual communication quality from the required quality, it is possible to improve greatly degraded communication qualities with higher priority.

For example, it is assumed that the communication quality is shown by the delay time at a transmission and the required qualities of the radio terminals or the communication connections are shown by an allowable delay time. Also, it is assumed that there are a radio terminal A having the allowable delay time 1 and actual delay time 3 and a radio terminal B having the allowable delay time 3 and actual delay time 4. According to the radio resource allocating method, since a delay time difference of the radio terminal A between the allowable delay time and the actual delay time is greater than that of the radio terminal B even if the actual delay time of the radio terminal B is longer than that of the radio terminal A, the radio resource is allocated to the radio terminal A with higher priority.

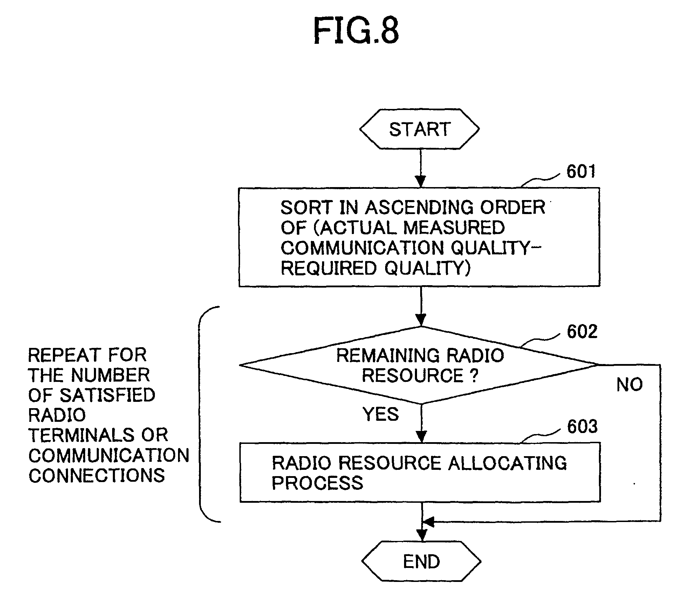

On the other hand, FIG.8 is a flowchart for explaining a third radio resource allocating process for allocating the radio resource to the satisfied radio terminals or communication connections in an ascending order of a difference between the required quality and the actual communication quality. First, the resource allocation priority ordering part 108 sorts all satisfied radio terminals or communication connections in the ascending order (smaller to greater) of a value that deducted the actual communication quality from the required quality (step 601). The sorted order becomes the priority order of the radio resource allocation. When the priority order of the radio resource allocation is determined, the resource allocating part 110 determines whether or not the radio resource is remaining (step 602). When the radio resource is remaining, the remained radio resource is allocated to the satisfied radio terminals or communication connections (step 603). On the other hand, when the radio resource is not remained, the third radio resource allocating process is terminated.

In the satisfied radio terminals or communication connections that satisfy relative required qualities, when the difference between the required quality and the actual communication quality is smaller, the actual communication quality may be degraded less than the required quality with high possibility. Accordingly, by allocating the radio resource in the ascending order (smaller to greater) of the difference between the required quality and the actual communication quality, it is possible to reduce a probability of degrading the communication quality less than the required quality.

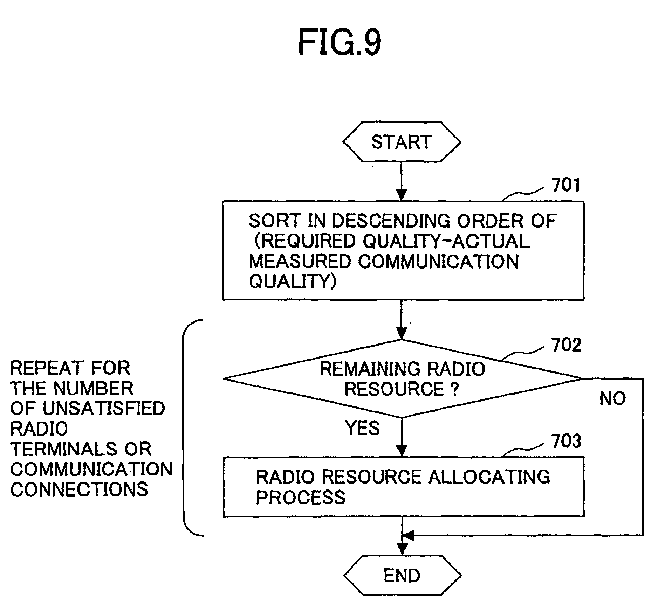

FIG.9 is a flowchart for explaining a fourth radio resource allocating process for allocating the radio resource to the unsatisfied radio terminals or communication connections in an descending order of a degradation degree of the actual communication quality to the required quality. First, the resource allocation priority ordering part 108 sorts all unsatisfied radio terminals or communication connections in the descending order (greater to smaller) of a value that deducted the actual communication quality from the required quality and divided by the required quality (step 701). The sorted order becomes the priority order of the radio resource allocation.

When the priority order of the radio resource allocation is determined, the resource allocating part 110 determines whether or not the radio resource is remaining (step 702). When the radio resource is remaining, the remained radio resource is allocated to the unsatisfied radio terminals or communication connections (step 703). On the other hand, when the radio resource is not remained, the fourth radio resource allocating process is terminated. Accordingly, by allocating the radio resource in the descending order (greater to smaller) of the value that deducted the actual communication quality from the required quality and divided by the required quality.

For example, it is assumed that there are the radio terminal A having the allowable delay time 1 and actual delay time 2 and the radio terminal B having the allowable delay time 1000 and actual delay time 1020 . According to the radio resource allocating method shown in FIG.9, differences between the required quality (allowable delay time) and the actual delay time (actual communication quality) of the terminals A and B are 1 and 20 [sec], respectively, and then ratios to the required qualities of the terminals A and B are 100 [%] and 2 [%] . Consequently, the radio resource is allocated to the terminal A with high priority.

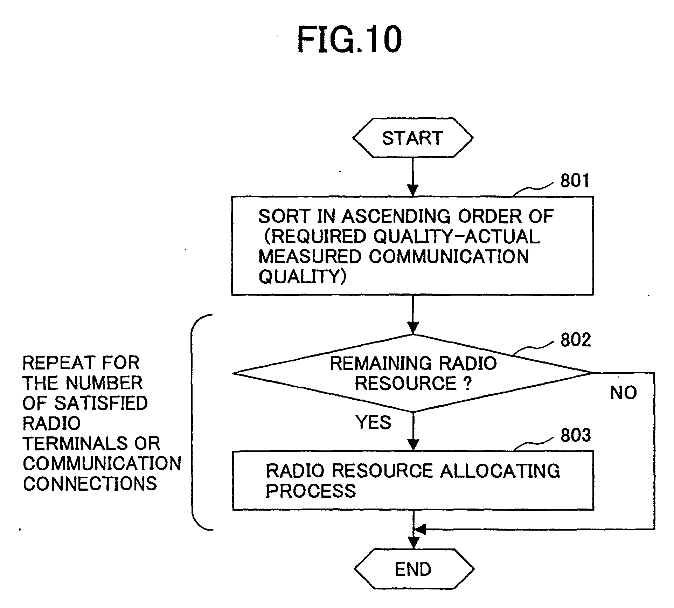

On the other hand, FIG.10 is a flowchart for explaining a fifth radio resource allocating process for allocating the radio resource to the satisfied radio terminals or communication connections in an ascending order of a favorable degree of the actual communication quality to the required quality. In this case, the resource allocation priority ordering part 108 sorts all satisfied radio terminals or communication connections in the ascending order (smaller to greater) of a value that deducted the actual communication quality from the required quality and divided by the required quality (step 801). The sorted order becomes the priority order of the radio resource allocation. When the priority order of the radio resource allocation is determined, the resource allocating part 110 determines whether or not the radio resource is remaining (step 802). When the radio resource is remaining, the remained radio resource is allocated to the satisfied radio terminals or communication connections (step 803). On the other hand, when the radio resource is not remained, the fifth radio resource allocating process is terminated.

In the satisfied radio terminals or communication connections that satisfy respective required qualities, when the favorable degree of the actual communication quality to the required quality is smaller, the actual communication quality may be degraded less than the required quality with high possibility. Accordingly, by allocating the radio resource in the ascending order (smaller to greater) of the difference between the required quality and the actual communication quality, it is possible to reduce a probability of degrading the communication quality less than the required quality.

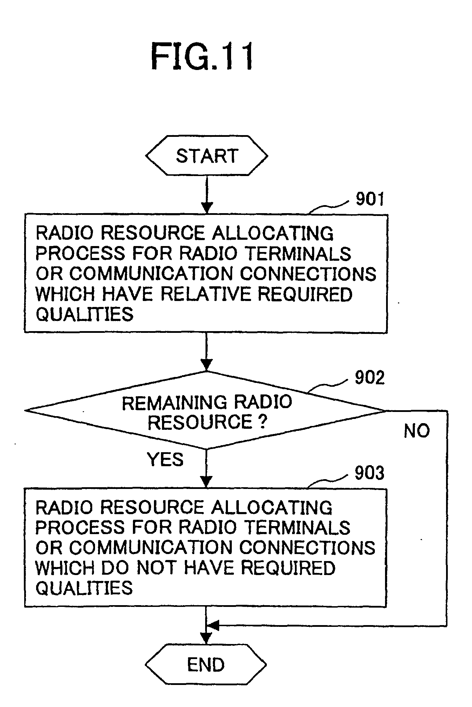

However, in a case in which one radio base station 1 manages the plurality of the radio terminals 10 through 40, all radio terminals or communication connections do not have respective required qualities. There may be some radio terminals that do not have respective required qualities (hereinafter called quality-not-required radio terminals). A sixth radio resource allocating process in this case will now be explained in accordance with a flowchart shown in FIG.11.

In this case, the radio resource is allocated to the radio terminals or communication connections that have respective required quality (hereinafter called quality-required radio terminals or communication connections) (step 901) . Subsequently, it is determined whether or not the radio resource is remaining (step 902). When the radio resource is remaining, the radio resource is allocated to the quality-not-required radio terminals or communication connections. That is, any one of radio resource allocation processes shown in FIG.5 through FIG.10 is conducted to the quality-required radio terminals or communication connections only. On the other hand, when the radio resource is not remained, the sixth radio resource allocating process is terminated.

The radio resource allocating processes shown in FIG.5 through FIG.11 are terminated when the radio resource is sufficiently allocated to all radio terminals or communication connections, or when an entire usable radio resource is allocated to the radio terminals or communication connections.

In the radio resource allocating processes as described above, the require quality is the allowable delay time, the transmission rate, the throughput or the like. Details in cases in which the required quality is the allowable delay time and the throughput will now be described.

In one case in which the required quality is the allowable delay time, an actual delay time is measured by a buffer of the sender side. In this embodiment, a transmission delay time on a radio link session (between one radio base station and one radio terminal) will be mainly exampled as the delay time. The larger delay time, the more the communication quality deteriorates. Accordingly, in FIG.5, when the actual delay time of the radio terminal or communication connection is greater than the allowable delay time, the radio terminal or communication connection does not satisfy the required quality. Thus, in FIG.6, the radio resource is allocated to the radio terminals or communication connections in the descending order of the actual delay time with priority. In FIG.7 through FIG.10, an absolute difference between the allowable delay time and the actual delay time can be applied as the difference between the required quality and the actual communication quality.

That is, when $D > Dth$ where $Dth$ denotes the allowable delay time and $D$ denotes an average actual delay time for a observation section $T$, the required quality is not satisfied. In the first radio resource allocating process in FIG.6, the radio resource is allocated in a descending order of the actual delay time $D$. In the second radio resource allocating process in FIG.7, the radio resource is allocated in a descending order of an absolute value $|D-Dth|$. In the fourth radio resource allocating process in FIG.9, the radio resource is allocated in a descending order of a value $|D-Dth|/Dth$. On the other hand, when $D < Dth$, the required quality is satisfied. In the first radio resource allocating process in FIG.6, the radio resource is allocated in a descending order of the actual delay time $D$. In the third radio resource allocating process in FIG.8, the radio resource is allocated in an ascending order of an absolute value $|D-Dth|$. In the fifth radio resource allocating process in FIG.10, the radio resource is allocated in an ascending order of a value $|D-Dth|/Dth$.

Alternatively, when the required quality is the throughput, it is necessary to count an information amount correctly received by a receiver side so as to calculate an actual throughput. A throughput calculating method will now be described with computation expressions. In the following computation expressions, an observation section $T$ [sec] for the throughput, an information amount $Ic$ correctly received during the observation session $T$, a throughput $Sth$ [bps] required by a certain radio resource or the communication connection, and an actual through put $S$ [bps] during the observation section $T$ are used.

First, in a case in which the certain radio terminal transmits information $I$ during the observation section $T$ [sec], the throughput $Sth$ required by the certain radio terminal of communication connection satisfies the following computation expression:

$$Sth = I/T.$$

That is, the certain radio terminal or communication connection requires an average of an information transmission rate during the observation section $T$ as the throughput. On the other hand, the actual throughput satisfies the following computation expression:

$$S = Ic/T.$$

In practice, the actual throughput is calculated as the number of packets correctly received during a unit time or the observation section T. The lower the throughput, the more the communication quality degrades. Accordingly, in FIG.5, when the actual throughput of the radio terminal or communication connection is lower than the required throughput, the radio terminal or communication connection does not satisfy the required quality. In FIG.6, the priority of the radio resource is determined in the ascending order of the actual throughput. In FIG.7 through FIG.10, an absolute difference between the required throughput and the actual throughput can be applied as the difference between the required quality and the actual communication quality.

That is, when S < Sth, the required quality is not satisfied. In this case, in the second radio resource allocating process in FIG.7, the radio resource is allocated in a descending order of an absolute value $|Sth-S|$. In the fourth radio resource allocating process in FIG.9, the radio resource is allocated in a descending order of a value $|Sth-S|/Sth$. On the other hand, when S > Sth, the required quality is satisfied. In the first radio resource allocating process in FIG.6, the radio resource is allocated in an ascending order of the actual throughput S. In the third radio resource allocating process in FIG.8, the radio resource is allocated in an ascending order of an absolute value $|Sth-S|$. In the fifth radio resource allocating process in FIG.10, the radio resource is allocated in an ascending order of a value $|Sth-S|/Sth$.

In a case in which the required quality is the allowable delay time or throughput, a priority order determining process for the radio resource allocation will now be described in details.

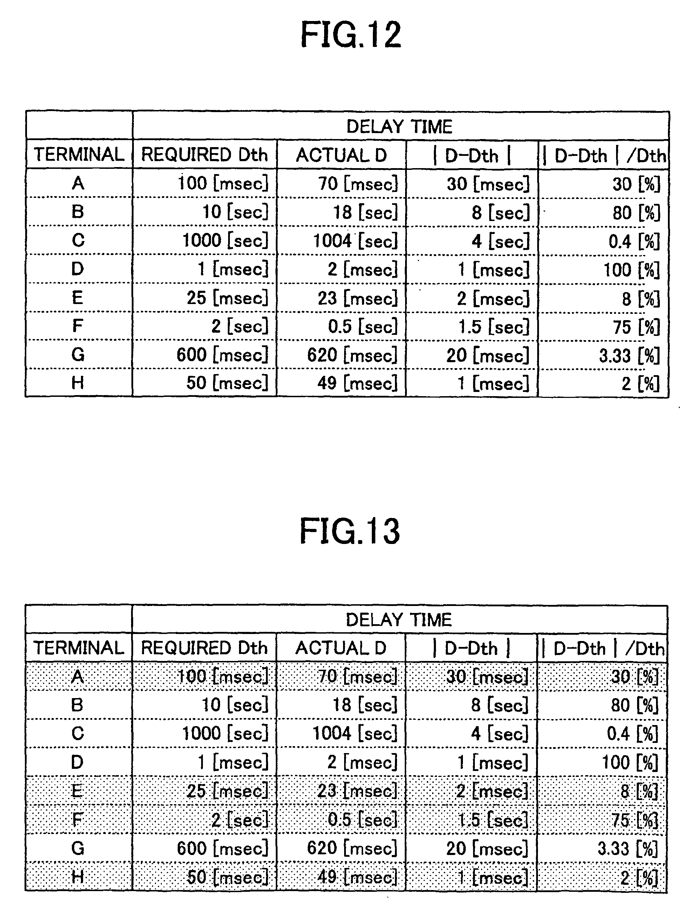

In FIG.12, the allowable delay time Dth and the actual delay time D are shown for radio terminals A through H in a case in which the required quality is the allowable delay time. The absolute value $|D-Dth|$ of a difference between the actual delay time D and the allowable delay time Dth, and a rate $|D-Dth|/Dth$ of the absolute value $|D-Dth|$ of the difference between the actual delay time D and allowable delay time Dth are shown in FIG.12.

Referring to FIG.12, delay time states in the radio terminals B, C, D and G (rows without shadows in FIG.13) show D > Dth. Thus, the respective required qualities are not satisfied. Accordingly, by using the radio resource allocating method of FIG.5, the radio resource is allocated to the radio terminals B, C, D and G with higher priority than the radio terminals A, E, F and H. Also, by using the first radio resource allocating method in FIG.6 for the unsatisfied radio terminals B, C, D and G that do not satisfy the relative request qualities, the radio resource is allocated in the descending order of the delay time D, that is, in an order of the radio terminals C, B, G and D. Alternatively, by using the second radio resource allocating method in FIG.7 for the unsatisfied radio terminals B, C, D and G, the radio resource is allocated in the descending order of the absolute value $|D-Dth|$ of difference between the actual delay time D and the allowable delay time Dth, that is, in an order of the radio terminals B, C, G and D. By using the fourth radio resource allocating method in FIG.9 for the unsatisfied radio terminals B, C, D and G, the radio resource is allocated in the descending order of the rate $|D-Dth|/Dth$ of the absolute value $|D-Dth|$ of the difference between the actual delay time D and the allowable delay time Dth, that is, in an order of the terminals D, B, G and C.

When the radio resource is allocated to the unsatisfied radio terminals B, C, D and G, the radio resource is allocated to remaining radio terminals, that is, the satisfied radio terminals A, E, F and H that satisfy the respective required qualities (rows with shadows in FIG.13). By using the radio resource allocating method in FIG.6 for the satisfied radio terminals A, E, F and H, the radio resource is allocated in the descending order of the actual delay time D, that is, in an order of the satisfied radio terminals F, A, H and E. Also, by using the third radio resource allocating method in FIG.8, the radio resource is allocated in the ascending order of the absolute value $|D-Dth|$ of the difference between the actual delay time D and the allowable delay time Dth, that is, in an order of the radio terminals H, E, A and F. Alternatively, by using the fifth radio resource allocating method in FIG.10, the radio resource is allocated in the ascending order of the rate $|D-Dth|/Dth$ of the absolute value $|D-Dth|$ of the difference between the actual delay time D and the allowable delay time Dth, that is, in an order of the radio terminals H, E, A and F.

Consequently, when the radio resource allocating method in FIG.6 is used for all radio terminals A through H, the radio resource is allocated in an order of the radio terminals C, B, G, D, F, A, H and E. When the second and third radio resource allocating methods in FIG.7 and FIG.8, the radio resource is allocated in an order of the radio terminals B, C, G, D, H, E, A and F. When the fourth and fifth radio resource allocating methods in FIG.9 and FIG.10, the radio resource is allocated in an order of the radio terminals D, B, G, C, H, E, A and F. Accordingly, the priority order is changed based on a prioritizing criterion. In FIG.12, for example, it is thought that the radio terminal C can be used for the data communication, and thus, a requirement for the delay time is generous. On the other hand, a requirement for the delay time of the radio terminal D is intense. When the delay time is considered, it is preferable to allocate the radio resource to the terminal D, which the required delay time is intense more than the terminal C, with higher priority. Therefore, it is preferable to consider not only the actual delay time and but also the difference degree between the actual communication quality and the required quality.

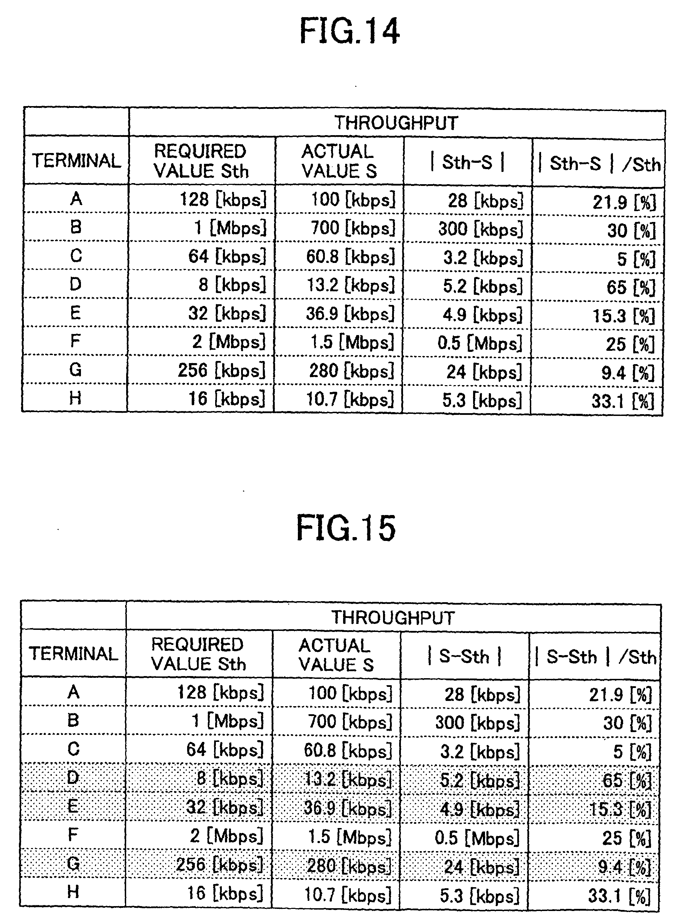

On the other hand, in FIG.14, the required throughput Sth and the actual throuput S for each of the radio terminals A through H are shown in a case in which the required quality is the throughput. Also, the absolute value |Sth-S| of the difference between the required throughput Sth and the actual throughput S, the rate |Sth-S|/Sth of the absolute value |Sth-S| of the difference between the required throughput Sth and the actual throughput S to the required throughput Sth are shown in FIG.14.

Referring to FIG.14, throughput states in the radio terminals A, B, C, F and H (rows without shadows in FIG.15) show S < Sth. Accordingly, by using the radio resource allocating method of FIG.5, the radio resource is allocated to the radio terminals A, B, C, F and H with higher priority than the radio terminals D, E and G. Also, by using the first radio resource allocating method in FIG.6 for the unsatisfied radio terminals A, B, C, F and H that do not satisfy the relative request qualities, the radio resource is allocated in the ascending order of the actual throughput S, that is, in an order of the radio terminals H, C, A, B and F. Alternatively, by using the second radio resource allocating method in FIG.7, the radio resource is allocated in the descending order of the absolute value |Sth-S| of difference between the required throughput Sth and the actual throughput S, that is, in an order of the radio terminals F, B, A, H and C. By using the fourth radio resource allocating method in FIG.9, the radio resource is allocated in the descending order of the rate |Sth-S|/Sth of the absolute value |Sth-S| of the difference between the required throughput Sth and the actual throughput S, to the required throughput Sth, that is, in an order of the terminals H, B, F, A and C.

When the radio resource is allocated to the unsatisfied radio terminals A, B, C, F and H, the radio resource is allocated to remaining radio terminals, that is, the satisfied radio terminals D, E and G that satisfy the respective required qualities (rows with shadows in FIG.15). By using the radio resource allocating method in FIG.6 for the satisfied radio terminals D, E and G, the radio resource is allocated in the ascending order of the actual throughput S, that is, in an order of the satisfied radio terminals D, E and G. Also, by using the third radio resource allocating method in FIG.8, the radio resource is allocated in the ascending order of the absolute value |Sth-S| of the difference between the required throughput Sth and the actual throughput S, that is, in an order of the radio terminals E, D and G. Alternatively, by using the fifth radio resource allocating method in FIG.10, the radio resource is allocated in the ascending order of the rate |Sth-S|/Sth of the absolute value |Sth-S| of the difference between the required throughput Sth and the actual throughput S, that is, in an order of the radio terminals G, E and D.

Consequently, when the radio resource allocating method in FIG.6 is used for all radio terminals A through H, the radio resource is allocated in an order of the radio terminals H, C, A, B, F, D, E and G. When the second and third radio resource allocating methods in FIG.7 and FIG.8, the radio resource is allocated in an order of the radio terminals F, B, A, H, C, E, D and G. When the fourth and fifth radio resource allocating methods in FIG.9 and FIG.10, the radio resource is allocated in an order of the radio terminals H, B, F, A, C, G, E and D. Accordingly, similarly to the case in which the required quality is the allowable delay time, the priority order is changed based on a prioritizing criterion.

In any one of the priority order determining processes for the radio resource allocation described above, each single frame or each unit of several frames is processed. It is thought that the shorter a process period, the better a system feature. However, the priority order determining processes become complicated. An optimal process period may be determined in a system design stage. It should be noted that a time required for one frame is needed so that signals from all radio terminals managed by the radio base station reach to the radio base station. Thus, a time period for one frame is required at the minimum.

In the conventional radio communication system, since the communication quality is almost evenly provided to each radio terminal or each communication connection, only fairness between the radio terminals or communication connections was considered. However, the multimedia radio communication system represented in FIG.3, it is required to satisfy a different required quality for each radio terminal or communication connection in order to provide a service. In this case, there are radio terminals or communication connections that intensely require the communication qualities, and radio terminals or communication connection that generously require the communication qualities. In such this system, in this embodiment described above, the priority order for the radio resource allocation is determined based on the required quality of each radio terminal or communication connection. Therefore, it is possible to increase the number of radio terminals or communication connections that satisfy the relative required qualities.

The present invention is not limited to the specifically disclosed embodiments, variations and modifications, and other variations and modifications may be made without departing from the scope of the present invention.

The present application is based on Japanese Priority Application No.2000-302637 filed on October 2, 2000.

**Claims**

1. A method for allocating radio resource to radio terminals (10, 20, 30, 40) or communication connections in a radio communication system in which each of said radio terminals or communication connections requires a different communication quality, said method **characterized by** the steps of:

(a) retrieving (301) a first group including radio terminals or communication connections in which actual communication qualities are degraded more than required communication qualities, and a second group including radio terminals or communication connections in which actual communication qualities are favorable more than required communication qualities; and
(b) allocating (302) the radio resource to the radio terminals or communication connections in said first group with higher priority than the radio terminals or communication connections in said second group.

2. The method as claimed in claim 1, further **characterized by** the steps of:

(c) retrieving a third group including radio terminals or communication connections that do not have required communication qualities;
(d) allocating (903) the radio resource to the radio terminals or communication connections in said third group when the radio resource is allocated to the radio terminals or communication connections in said first group and said second group in said step (b).

3. The method as claimed in claim 1, **characterized in that** said step (b) allocates the radio resource to the radio terminals or communication connections in said first group in an ascending order of said actual communication qualities, an descending order of differences between said required communication qualities and said actual communication qualities, or an.descending order of deterioration degrees of the actual communication qualities to the required communication qualities, wherein the deterioration degree indicates the degree by which the actual communication quality is lower than the required communication quality.

4. The method as claimed in claim 1, **characterised in that** said step (b) allocates the radio resource to the radio terminals or communication connections in said second group in an ascending order of said actual communication qualities, an ascending order of differences between said required communication qualities and said actual communication qualities, or favourable degrees of the actual communication qualities to the required communication qualities, wherein the favourable degree indicates the degree by which the actual communication quality is higher than the required communication quality.

5. The method as claimed in claim 1, **characterised in that** said required communication qualities are communication qualities concerning allowable delay times, transmission rates, or throughputs.

6. A radio communication apparatus for allocating radio resource to radio terminals (10, 20, 30, 40) or communication connections in a radio communication system in which each of said radio terminals or communication connections requires a different communication quality, said radio communication apparatus **characterized by**:

a first retrieving part (108) retrieving a first group including radio terminals or communication connections in which actual communication qualities are degraded more than required communication qualities, and a second group including radio terminals or communication connections in which actual communication qualities are favorable more than required communication qualities; and
a first allocating part (110) allocating the radio resource to the radio terminals or communication connections in said first group with higher priority than the radio terminals or communication connections in said second group.

7. The radio communication apparatus as claimed in claim 6, further **characterized by**:

a second retrieving part retrieving a third group including radio terminals or communication connections that do not have required communication qualities;
a second allocating part (903) allocating the radio resource to the radio terminals or communication connections in said third group when the radio resource is allocated to the radio terminals or communication connections in said first group and said second group by said first allocating part.

8. The radio communication apparatus as claimed in claim 6, **characterised in that** said first allocating part allocates the radio resource to the radio terminals or communication connections in said first group in an ascending order of said actual communication qualities, an descending order of differences between said required communication qualities and said actual communication qualities, or an descending order of deterioration degrees of the actual communication qualities to the required communication qualities, wherein the deterioration degree indicated the degree by which the actual communication quality is lower than the required communication quality.

9. The radio communication apparatus as claimed in claim 6, **characterized in that** said first allocating part allocates the radio resource to the radio terminals or communication connections in said second group in an ascending order of said actual communication qualities, an ascending order of differences between said required communication qualities and said actual communication qualities, or favorable degrees of the actual communication qualities to the required communication qualities, wherein the favourable degree indicates the degree by which the actual communication quality is higher than the required communication quality.

10. The radio communication apparatus as claimed in claim 6, **characterized in that** said required communication qualities are communication qualities concerning allowable delay times, transmission rates, or throughputs.

11. A radio communication system which allocates radio resource for a radio communication, said radio communication system comprising a radio communication apparatus (1) and radio terminals (10, 20, 30, 40),
said radio communication apparatus (1) is **characterized in that** each of said radio terminals (10, 20, 30, 40) is **characterized by** a requiring part requiring a different communication quality to said radio communication system for each radio terminal or communication connection, and
said radio communication apparatus (1) is **characterized by**:

a first retrieving part (108) retrieving a first group including radio terminals or communication connections in which actual communication qualities are degraded more than required communication qualities, and a second group including radio terminals or communication connections in which actual communication qualities are favorable more than required communication qualities; and
a first allocating part (110) allocating the radio resource to the radio terminals or communication connections in said first group with higher priority than the radio terminals or communication connections in said second group.

12. The radio communication system as claimed in claim 11, **characterized in that** said radio communication apparatus further is **characterized by**:

a second retrieving part retrieving a third group including radio terminals or communication connections that do not have required communication qualities;
a second allocating part allocating the radio resource to the radio terminals or communication connections in said third group when the radio resource is allocated to the radio terminals or communication connections in said first group and said second group by said first allocating part.

**Patentansprüche**

1. Verfahren zum Zuteilen von Funk-Ressourcen zu Funk-Endgeräten (10, 20, 30, 40) oder Kommunikationsverbindungen in einem Funk-Kommunikationssystem, in dem jedes der Funk-Endgeräte oder jede der Kommunikationsverbindungen verschiedene Kommunikationsqualitäten erfordert, welches Verfahren **gekennzeichnet ist durch** Schritte zum

(a) Abrufen (301) einer ersten Gruppe, die Funk-Endgeräte oder Kommunikationsverbindungen enthält, bei denen die tatsächlichen Kommunikationsqualitäten mehr als die erforderlichen Kommunikationsqualitäten herabgesetzt sind, und einer zweiten Gruppe, die Funk-Endgeräte oder Kommunikationsverbindungen enthält, bei denen die tatsächlichen Kommunikationsqualitäten günstiger als die erforderlichen Kommunikationsqualitäten sind, und
(b) Zuteilen (302) der Funk-Ressource zu den Funk-Endgeräten oder Kommunikationsverbindungen in der ersten Gruppe mit höherer Priorität als die Funk-Endgeräte oder Kommunikationsverbindungen in der zweiten Gruppe.

2. Verfahren nach Anspruch 1, das ferner **gekennzeichnet ist durch** Schritte zum

(c) Abrufen einer dritten Gruppe, die Funk-Endgeräte oder Kommunikationsverbindungen enthält, die nicht die erforderlichen Kommunikationsqualitäten haben,
(d) Zuteilen (903) der Funk-Ressource zu den Funk-Endgeräten oder Kommunikationsverbindungen in der dritten Gruppe, wenn die Funk-Ressource in Schritt (b) den Funk-Endgeräten oder Kommunikationsverbindungen in der ersten Gruppe und der zweiten Gruppe zugeteilt sind.

3. Verfahren nach Anspruch 1, **dadurch gekennzeichnet, dass** Schritt (b) die Funk-Ressource den Funk-Endgeräten oder Kommunikationsverbindungen in der ersten Gruppe in einer ansteigenden Ordnung der tatsächlichen Kommunikationsqualitäten, einer abfallenden Ordnung von Differenzen zwischen den erforderlichen Kommunikationsqualitäten und den tatsächlichen Kommunikationsqualitäten oder einer abfallenden Ordnung von Verschlechterungsgraden der tatsächlichen Kommunikationsqualitäten in bezug zu den erforderlichen Kommunikationsqualitäten zuteilt, wobei der Verschlechterungsgrad den Grad angibt, um den die tatsächliche Kommunikationsqualität niedriger als die erforderliche Kommunikationsqualität ist.

4.  Verfahren nach Anspruch 1, **dadurch gekennzeichnet, dass** Schritt (b) die Funk-Ressource den Funk-Endgeräten oder Kommunikationsverbindungen in der zweiten Gruppe in einer ansteigenden Ordnung der tatsächlichen Kommunikationsqualitäten, einer ansteigenden Ordnung von Differenzen zwischen den erforderlichen Kommunikationsqualitäten und den tatsächlichen Kommunikationsqualitäten oder günstigen Graden der tatsächlichen Kommunikationsqualitäten in bezug auf die erforderlichen Kommunikationsqualitäten zuteilt, wobei der günstige Grad dem Grad angibt, um den die tatsächliche Kommunikationsqualität höher als die erforderliche Kommunikationsqualität ist.

5.  Verfahren nach Anspruch 1, **dadurch gekennzeichnet, dass** die erforderlichen Kommunikationsqualitäten Kommunikationsqualitäten sind, die zulässige Verzögerungszeiten, Übertragungsraten oder Durchsätze betreffen.

6.  Funk-Kommunikationsgerät zum Zuteilen einer Funk-Ressource zu Funk-Endgeräten (10, 20, 30, 40) oder Kommunikationsverbindungen in einem Funk-Kommunikationssystem, *in* dem jedes der Funk-Endgeräte oder jede der Kommunikationsverbindungen eine verschiedene Kommunikationsqualität erfordert, welches Funk-Kommunikationsgerät **gekennzeichnet ist durch**
    einen ersten Abrufteil (108), der eine erste Gruppe, die Funk-Endgeräte oder Kommunikationsverbindungen enthält, bei denen die tatsächlichen Kommunikationsqualitäten mehr als die erforderlichen Kommunikationsqualitäten herabgesetzt sind, und eine zweite Gruppe abruft, die Funk-Endgeräte oder Kommunikationsverbindungen enthält, bei denen die tatsächlichen Kommunikationsqualitäten günstiger als die erforderlichen Kommunikationsqualitäten sind, und
    einen ersten Zuteilungsteil (110), der die Funk-Ressource den Funk-Endgeräten oder Kommunikationsverbindungen in der ersten Gruppe mit höherer Priorität als die Funk-Endgeräte oder Kommunikationsverbindungen in der zweiten Gruppe zuteilt.

7.  Funk-Kommunikationsgerät nach Anspruch 6, das ferner **gekennzeichnet ist durch**
    einen zweiten Abrufteil, der eine dritte Gruppe abruft, die Funk-Endgeräte oder Kommunikationsverbindungen enthält, die nicht die erforderlichen Kommunikationsqualitäten haben,
    einen zweiten Zuteilungsteil (903), der die Funk-Ressource den Funk-Endgeräten oder Kommunikationsverbindungen in der dritten Gruppe zuteilt, wenn die Funk-Ressource den Funk-Endgeräten oder Kommunikationsverbindungen in der ersten Gruppe und der zweiten Gruppe **durch** den ersten Zuteilungsteil zugeteilt ist.

8.  Funk-Kommunikationsgerät nach Anspruch 6, **dadurch gekennzeichnet, dass** der erste Zuteilungsteil die Funk-Ressource den Funk-Endgeräten oder Kommunikationsverbindungen in der ersten Gruppe in einer ansteigenden Ordnung der tatsächlichen Kommunikationsqualitäten, einer abfallenden Ordnung von Differenzen zwischen den erforderlichen Kommunikationsqualitäten und den tatsächlichen Kommunikationsqualitäten oder einer abfallenden Ordnung von Verschlechterungsgraden der tatsächlichen Kommunikationsqualitäten in Bezug auf die erforderlichen Kommunikationsqualitäten zuteilt, wobei der Verschlechterungsgrad den Grad angibt, um den die tatsächliche Kommunikationsqualität niedriger als die erforderliche Kommunikationsqualität ist.

9.  Funk-Kommunikationsgerät nach Anspruch 6, **dadurch gekennzeichnet, dass** der erste Zuteilungsteil die Funk-Ressource den Funk-Endgeräten oder Kommunikationsverbindungen in der zweiten Gruppe in einer ansteigenden Ordnung der tatsächlichen Kommunikationsqualitäten, einer ansteigenden Ordnung von Differenzen zwischen den erforderlichen Kommunikationsqualitäten und den tatsächlichen Kommunikationsqualitäten oder günstigen Graden der tatsächlichen Kommunikationsqualitäten in Bezug auf die erforderlichen Kommunikationsqualitäten zuteilt, wobei der günstige Grad den Grad angibt, um den die tatsächliche Kommunikationsqualität höher als die erforderliche Kommunikationsqualität ist.

10.  Funk-Kommunikationsgerät nach Anspruch 6, **dadurch gekennzeichnet, dass** die erforderlichen Kommunikationsqualitäten Kommunikationsqualitäten sind, die zulässige Verzögerungszeiten, Übertragungsraten oder Durchsätze betreffen.

11.  Funk-Kommunikationssystem, das eine Funk-Ressource für eine Funk-Kommunikation zuteilt, welches Funk-Kommunikationssystem ein Funk-Kommunikationsgerät (1) und Funk-Endgeräte (10, , 20, 30, 40) umfasst, **dadurch gekennzeichnet, dass** jedes der Funk-Endgeräte (10, 20, 30, 40) durch einen Anforderungsteil **gekennzeichnet** ist, der eine verschiedene Kommunikationsqualität in Bezug auf das Funk-Kommunikationssystem für jedes Funk-Endgerät oder jede Kommunikationsverbindung erfordert, wobei das Funk-Kommunikationsgerät (1) **gekennzeichnet ist durch**

einen ersten Abrufteil (108), der eine erste Gruppe, die Funk-Endgeräte oder Kommunikationsverbindungen enthält, bei denen die tatsächlichen Kommunikationsqualitäten mehr als die erforderlichen Kommunikationsqualitäten herabgesetzt sind, und ein zweite Gruppe abruft, die Funk-Endgeräte oder Kommunikationsverbindungen enthält, bei denen die tatsächlichen Kommunikationsqualitäten günstiger als die erforderlichen Kommunikationsqualitäten sind, und

einen ersten Zuteilungsteil (110), der die Funk-Ressource den Funk-Endgeräten oder Kommunikationsverbindungen in der ersten Gruppe mit höherer Priorität als die Funk-Endgeräte oder Kommunikationsverbindungen in der zweiten Gruppe zuteilt.

12. Funk-Kommunikationssystem nach Anspruch 11, **dadurch gekennzeichnet, dass** das Funk-Kommunikationsgerät ferner **gekennzeichnet ist durch** einen zweiten Abrufteil, der eine dritte Gruppe abruft, die Funk-Endgeräte oder Kommunikationsverbindungen enthält, die nicht die erforderlichen Kommunikationsqualitäten haben,

einen zweiten Zuteilungsteil, der die Funk-Ressource den Funk-Endgeräten oder Kommunikationsverbindungen in der dritten Gruppe zuteilt, wenn die Funk-Ressource den Funk-Endgeräten oder Kommunikationsverbindungen in der ersten Gruppe und der zweiten Gruppe **durch** den ersten Zuteilungsteil zugeteilt ist.

## Revendications

1. Procédé pour allouer des ressources radio à des terminaux radio (10, 20, 30, 40) ou à des connexions de communication dans un système de communication radio dans lequel chacun desdits terminaux radio ou connexions de communication requiert une qualité de communication différente, ledit procédé étant **caractérisé par** les étapes consistant à :

(a) récupérer (301) un premier groupe incluant des terminaux radio ou des connexions de communication dans lesquels les qualités de communication réelles sont plus dégradées que les qualités de communication requises, et un deuxième groupe incluant des terminaux radio ou des connexions de communication dans lesquels les qualités de communication réelles sont plus favorables que les qualités de communication requises ; et
(b) allouer (302) les ressources radio aux terminaux radio ou connexions de communication dans ledit premier groupe avec une priorité plus élevée que les terminaux radio ou connexions de communication dans ledit deuxième groupe.

2. Procédé tel que revendiqué dans la revendication 1, **caractérisé en outre par** les étapes consistant à :

(c) récupérer un troisième groupe incluant des terminaux radio ou des connexions de communication qui n'ont pas de qualités de communication requises ;
(d) allouer (903) les ressources radio aux terminaux radio ou connexions de communication dans ledit troisième groupe lorsque les ressources radio sont allouées aux terminaux radio ou connexions de communication dans ledit premier groupe et ledit deuxième groupe à ladite étape (b).

3. Procédé tel que revendiqué dans la revendication 1, **caractérisé en ce que** ladite étape (b) alloue les ressources radio aux terminaux radio ou connexions de communication dans ledit premier groupe dans un ordre croissant desdites qualités de communication réelles, un ordre décroissant de différences entre lesdites qualités de communication requises et lesdites qualités de communication réelles, ou un ordre décroissant de degrés de détérioration des qualités de communication réelles par rapport aux qualités de communication requises, dans lequel le degré de détérioration indique le degré par lequel la qualité de communication réelle est inférieure à la qualité de communication requise.

4. Procédé tel que revendiqué dans la revendication 1, **caractérisé en ce que** ladite étape (b) alloue les ressources radio aux terminaux radio ou connexions de communication dans ledit deuxième groupe dans un ordre croissant desdites qualités de communication réelles, un ordre croissant de différences entre lesdites qualités de communication requises et lesdites qualités de communication réelles, ou de degrés favorables des qualités de communication réelles par rapport aux qualités de communication requises, dans lequel le degré favorable indique le degré par lequel la qualité de communication réelle est supérieure à la qualité de communication requise.

5. Procédé tel que revendiqué dans la revendication 1, **caractérisé en ce que** lesdites qualités de communication requises sont des qualités de communication concernant des temps de retard admissibles, des taux de transmission, ou des débits.

6. Appareil de communication radio pour allouer des ressources radio à des terminaux radio (10, 20, 30, 40) ou à des connexions de communication dans un système de communication radio dans lequel chacun desdits terminaux radio ou connexions de communication requiert une qualité de communication différente, ledit appareil de communication radio étant **caractérisé par** :

une première partie de récupération (108) récupérant un premier groupe incluant des terminaux radio ou des connexions de communication dans lesquels les qualités de communication réelles sont plus dégradées que les qualités de communication requises, et un deuxième groupe incluant des terminaux radio ou des connexions de communication dans lesquels les qualités de communication réelles sont plus favorables que les qualités de communication requises ; et

une première partie d'allocation (110) allouant les ressources radio aux terminaux radio ou connexions de communication dans ledit premier groupe avec une priorité plus élevée que les terminaux radio ou connexions de communication dans ledit deuxième groupe.

7. Appareil de communication radio tel que revendiqué dans la revendication 6, **caractérisé en outre par** :

une seconde partie de récupération récupérant un troisième groupe incluant des terminaux radio ou des connexions de communication qui n'ont pas de qualités de communication requises ;

une seconde partie d'allocation (903) allouant les ressources radio aux terminaux radio ou connexions de communication dans ledit troisième groupe lorsque les ressources radio sont allouées aux terminaux radio ou connexions de communication dans ledit premier groupe et ledit deuxième groupe par ladite première partie d'allocation.

8. Appareil de communication radio tel que revendiqué dans la revendication 6, **caractérisé en ce que** ladite première partie d'allocation alloue les ressources radio aux terminaux radio ou connexions de communication dans ledit premier groupe dans un ordre croissant desdites qualités de communication réelles, un ordre décroissant de différences entre lesdites qualités de communication requises et lesdites qualités de communication réelles, ou un ordre décroissant de degrés de détérioration des qualités de communication réelles par rapport aux qualités de communication requises, dans lequel le degré de détérioration indique le degré par lequel la qualité de communication réelle est inférieure à la qualité de communication requise.

9. Appareil de communication radio tel que revendiqué dans la revendication 6, **caractérisé en ce que** ladite première partie d'allocation alloue les ressources radio aux terminaux radio ou connexions de communication dans ledit deuxième groupe dans un ordre croissant desdites qualités de communication réelles, un ordre croissant de différences entre lesdites qualités de communication requises et lesdites qualités de communication réelles, ou de degrés favorables des qualités de communication réelles par rapport aux qualités de communication requises, dans lequel le degré favorable indique le degré par lequel la qualité de communication réelle est supérieure à la qualité de communication requise.

10. Appareil de communication radio tel que revendiqué dans la revendication 6, **caractérisé en ce que** lesdites qualités de communication requises sont des qualités de communication concernant des temps de retard admissibles, des taux de transmission, ou des débits.

11. Système de communication radio qui alloue des ressources radio pour une communication radio, ledit système de communication radio comprenant un appareil de communication radio (1) et des terminaux radio (10, 20, 30, 40),
**caractérisé en ce que** chacun desdits terminaux radio (10, 20, 30, 40) est **caractérisé par** une partie requérante requérant une qualité de communication différente audit système de communication radio pour chaque terminal radio ou connexion de communication, et
ledit appareil de communication radio (1) est **caractérisé par** :

une première partie de récupération (108) récupérant un premier groupe incluant des terminaux radio ou des connexions de communication dans lesquels les qualités de communication réelles sont plus dégradées que les qualités de communication requises, et un deuxième groupe incluant des terminaux radio ou des connexions de communication dans lesquels les qualités de communication réelles sont plus favorables que les qualités de communication requises ; et

une première partie d'allocation (110) allouant les ressources radio aux terminaux radio ou connexions de communication dans ledit premier groupe avec une priorité plus élevée que les terminaux radio ou connexions de communication dans ledit deuxième groupe.

12. Système de communication radio tel que revendiqué dans la revendication 11, **caractérisé en ce que** ledit appareil de communication radio est en outre **caractérisé par** :

une seconde partie de récupération récupérant un troisième groupe incluant des terminaux radio ou des connexions de communication qui n'ont pas de qualités de communication requises ;

une seconde partie d'allocation allouant les res-

**EP 1 193 993 B1**

sources radio aux terminaux radio ou connexions de communication dans ledit troisième groupe lorsque les ressources radio sont allouées aux terminaux radio ou connexions de communication dans ledit premier groupe et ledit deuxième groupe par ladite première partie d'allocation.

# FIG.1 PRIOR ART

COMMUNICATION
QUALITY

•••••• COMMUNICATION QUALITY
REFERENCE DETERMINED BY
RADIO COMMUNICATION SYSTEM

—— ACTUAL QUALITY

TERMINAL B

•••••••••••••••••••••••••••••••••••••••••••••

TERMINAL A

TERMINAL C

TERMINAL D

# FIG.2 PRIOR ART

# FIG. 3

1 : RADIO BASE STATION

11  21  31  41

10 : RADIO TERMINAL

12

20 : RADIO TERMINAL

22

30 : RADIO TERMINAL

32

40 : RADIO TERMINAL

42

EP 1 193 993 B1

# FIG.4

1

| RECEIVER | ~ 102 | TRANSMITTER | ~ 104 |

COMMUNICATION QUALITY
MEASURING PART ~ 106

RESOURCE ALLOCATION
PRIORITY ORDERING PART ~ 108

RESOURCE ALLOCATING PART ~ 110

# FIG.5

START

REPEAT FOR
ALL RADIO
TERMINALS OR
COMMUNICATION
CONNECTIONS

301

ACTUAL QUALITY <
REQUIRED QUALITY

NO

YES

302

RESOURCE ALLOCATING PROCESS
FOR UNSATISFIED RADIO TERMINALS
OR COMMUNICATION CONNECTIONS

303

REMAINING RADIO
RESOURCE ?

NO

YES

304

RESOURCE ALLOCATING PROCESS
FOR SATISFIED RADIO TERMINALS
OR COMMUNICATION CONNECTIONS

END

# FIG.6

START

SORT IN LOW ORDER OF ACTUAL QUALITY ⟋ 401

REPEAT FOR THE NUMBER OF TERMINALS OR RADIO COMMUNICATION CONNECTIONS

REMAINING RADIO RESOURCE ? ⟋ 402

NO

YES

RADIO RESOURCE ALLOCATING PROCESS ⟋ 403

END

# FIG.7

START

SORT IN DESCENDING ORDER OF (REQUIRED QUALITY–ACTUAL MEASURED COMMUNICATION QUALITY) — 501

REMAINING RADIO RESOURCE ? — 502

NO

YES

RADIO RESOURCE ALLOCATING PROCESS — 503

REPEAT FOR THE NUMBER OF UNSATISFIED RADIO TERMINALS OR COMMUNICATION CONNECTIONS

END

# FIG.8

START

601

SORT IN ASCENDING ORDER
OF (ACTUAL MEASURED
COMMUNICATION QUALITY-
REQUIRED QUALITY)

602

REMAINING RADIO
RESOURCE ?

NO

YES

603

RADIO RESOURCE ALLOCATING
PROCESS

END

REPEAT FOR
THE NUMBER
OF SATISFIED
RADIO
TERMINALS OR
COMMUNICATION
CONNECTIONS

# FIG.9

START

701

SORT IN DESCENDING ORDER OF
(REQUIRED QUALITY-ACTUAL
MEASURED COMMUNICATION
QUALITY)

REPEAT FOR
THE NUMBER
OF UNSATISFIED
RADIO
TERMINALS OR
COMMUNICATION
CONNECTIONS

702

REMAINING RADIO
RESOURCE ?

NO

YES

703

RADIO RESOURCE ALLOCATING
PROCESS

END

# FIG.10

START

SORT IN ASCENDING ORDER OF
(REQUIRED QUALITY-ACTUAL
MEASURED COMMUNICATION
QUALITY)

801

REMAINING RADIO
RESOURCE ?

802

NO

YES

RADIO RESOURCE ALLOCATING
PROCESS

803

REPEAT FOR
THE NUMBER
OF SATISFIED
RADIO
TERMINALS OR
COMMUNICATION
CONNECTIONS

END

# FIG.11

```
                    ┌─────────────┐
                    │    START    │
                    └──────┬──────┘
                           │           ⟋ 901
         ┌─────────────────▼─────────────────┐
         │ RADIO RESOURCE ALLOCATING         │
         │ PROCESS FOR RADIO TERMINALS       │
         │ OR COMMUNICATION CONNECTIONS      │
         │ WHICH HAVE RELATIVE REQUIRED      │
         │ QUALITIES                         │
         └─────────────────┬─────────────────┘
                           │              ⟋ 902
                    ◇──────▼──────◇
              ⟋ REMAINING RADIO        ⟍
         ◇        RESOURCE ?              ◇──────┐
              ⟍                        ⟋      NO │
                    ◇─────────────◇             │
                     YES │                      │
                         │          ⟋ 903       │
         ┌───────────────▼───────────────────┐  │
         │ RADIO RESOURCE ALLOCATING         │  │
         │ PROCESS FOR RADIO TERMINALS       │  │
         │ OR COMMUNICATION CONNECTIONS      │  │
         │ WHICH DO NOT HAVE REQUIRED        │  │
         │ QUALITIES                         │  │
         └───────────────┬───────────────────┘  │
                         │◄─────────────────────┘
                    ┌────▼────┐
                    │   END   │
                    └─────────┘
```

# FIG.12

| TERMINAL | DELAY TIME | | | |
|---|---|---|---|---|
| | REQUIRED Dth | ACTUAL D | \| D-Dth \| | \| D-Dth \| /Dth |
| A | 100 [msec] | 70 [msec] | 30 [msec] | 30 [%] |
| B | 10 [sec] | 18 [sec] | 8 [sec] | 80 [%] |
| C | 1000 [sec] | 1004 [sec] | 4 [sec] | 0.4 [%] |
| D | 1 [msec] | 2 [msec] | 1 [msec] | 100 [%] |
| E | 25 [msec] | 23 [msec] | 2 [msec] | 8 [%] |
| F | 2 [sec] | 0.5 [sec] | 1.5 [sec] | 75 [%] |
| G | 600 [msec] | 620 [msec] | 20 [msec] | 3.33 [%] |
| H | 50 [msec] | 49 [msec] | 1 [msec] | 2 [%] |

# FIG.13

| TERMINAL | DELAY TIME | | | |
|---|---|---|---|---|
| | REQUIRED Dth | ACTUAL D | \| D-Dth \| | \| D-Dth \| /Dth |
| A | 100 [msec] | 70 [msec] | 30 [msec] | 30 [%] |
| B | 10 [sec] | 18 [sec] | 8 [sec] | 80 [%] |
| C | 1000 [sec] | 1004 [sec] | 4 [sec] | 0.4 [%] |
| D | 1 [msec] | 2 [msec] | 1 [msec] | 100 [%] |
| E | 25 [msec] | 23 [msec] | 2 [msec] | 8 [%] |
| F | 2 [sec] | 0.5 [sec] | 1.5 [sec] | 75 [%] |
| G | 600 [msec] | 620 [msec] | 20 [msec] | 3.33 [%] |
| H | 50 [msec] | 49 [msec] | 1 [msec] | 2 [%] |

# FIG.14

| TERMINAL | THROUGHPUT | | | |
|:---:|:---:|:---:|:---:|:---:|
| | REQUIRED VALUE Sth | ACTUAL VALUE S | \| Sth-S \| | \| Sth-S \| /Sth |
| A | 128 [kbps] | 100 [kbps] | 28 [kbps] | 21.9 [%] |
| B | 1 [Mbps] | 700 [kbps] | 300 [kbps] | 30 [%] |
| C | 64 [kbps] | 60.8 [kbps] | 3.2 [kbps] | 5 [%] |
| D | 8 [kbps] | 13.2 [kbps] | 5.2 [kbps] | 65 [%] |
| E | 32 [kbps] | 36.9 [kbps] | 4.9 [kbps] | 15.3 [%] |
| F | 2 [Mbps] | 1.5 [Mbps] | 0.5 [Mbps] | 25 [%] |
| G | 256 [kbps] | 280 [kbps] | 24 [kbps] | 9.4 [%] |
| H | 16 [kbps] | 10.7 [kbps] | 5.3 [kbps] | 33.1 [%] |

# FIG.15

| TERMINAL | THROUGHPUT | | | |
|:---:|:---:|:---:|:---:|:---:|
| | REQUIRED VALUE Sth | ACTUAL VALUE S | \| S-Sth \| | \| S-Sth \| /Sth |
| A | 128 [kbps] | 100 [kbps] | 28 [kbps] | 21.9 [%] |
| B | 1 [Mbps] | 700 [kbps] | 300 [kbps] | 30 [%] |
| C | 64 [kbps] | 60.8 [kbps] | 3.2 [kbps] | 5 [%] |
| D | 8 [kbps] | 13.2 [kbps] | 5.2 [kbps] | 65 [%] |
| E | 32 [kbps] | 36.9 [kbps] | 4.9 [kbps] | 15.3 [%] |
| F | 2 [Mbps] | 1.5 [Mbps] | 0.5 [Mbps] | 25 [%] |
| G | 256 [kbps] | 280 [kbps] | 24 [kbps] | 9.4 [%] |
| H | 16 [kbps] | 10.7 [kbps] | 5.3 [kbps] | 33.1 [%] |